Europäisches Patentamt

European Patent Office

Office européen des brevets

(11) Numéro de publication : **0 430 728 A1**

# (12) DEMANDE DE BREVET EUROPEEN

(21) Numéro de dépôt : **90403064.0**

(22) Date de dépôt : **30.10.90**

(51) Int. Cl.⁵ : **B60G 21/055**

(30) Priorité : **29.11.89 FR 8915702**

(43) Date de publication de la demande :
**05.06.91 Bulletin 91/23**

(84) Etats contractants désignés :
**DE ES GB IT**

(71) Demandeur : **REGIE NATIONALE DES USINES RENAULT S.A.**
**34, Quai du Point du Jour**
**F-92109 Boulogne Billancourt Cédex (FR)**

(72) Inventeur : **Marcillaud**
**7, rue des Sorbiers**
**F-91290 La Norville (FR)**

(54) **Essieu souple pour véhicule automobile.**

(57) Essieu pour véhicule, comprenant une traverse (1) indéformable en flexion mais souple en torsion, sensiblement rectiligne et à section en V dans son ensemble, soudée à chaque extrémité à un bras tubulaire (4) situé dans un plan parallèle à l'axe du V, et orienté à peu près perpendiculairement à la direction de la traverse, ce bras portant à une de ses extrémités un moyen d'articulation (5) au châssis du véhicule, d'axe parallèle à la direction de la traverse, et à son autre extrémité un support de fusée (6) pour une roue du véhicule. La traverse (1) présente une section qui s'agrandit progressivement au voisinage de sa jonction avec le bras par approfondissement de la forme en V de la section et passage à une forme en U, les bords de la traverse, qui correspondent aux extrémités du V de la section, restant rectilignes, et elle est liée au bras (4) par soudure de la partie (11) ainsi élargie, sans adjonction d'une pièce de renfort.

FIG.:2

EP 0 430 728 A1

## ESSIEU SOUPLE POUR VEHICULE AUTOMOBILE

La présente invention est relative à un essieu pour véhicule, en particulier pour roues non motrices, comprenant une traverse souple en torsion, reliée à ses extrémités à deux bras qui portent une fusée de roue, et est articulée au châssis.

On connait des essieux pour véhicules qui comprennent une traverse indéformable en section mais souple en torsion, sensiblement rectiligne, et à section en V dans son ensemble, soudée à chacune de ses extrémités à un bras tubulaire situé dans un plan parallèle à l'axe du V, et orienté à peu près perpendiculairement à la direction de la traverse. Ce bras porte à une de ses extrémités un moyen d'articulation au châssis du véhicule, cette articulation étant d'axe parallèle à la direction de la traverse, et à son autre extrémité, un support de fusée pour une roue du véhicule.

Dans la pratique connue, la traverse est formée d'un profilé, à section sensiblement constante sur toute sa longueur, et qui est reliée au bras tubulaire par soudure, avec adjonction d'un gousset en forme de triangle rectangle, situé dans le plan commun au bras et à la traverse, et qui est soudé par un de ses côtés à la traverse dans la région de la pointe du U, et par un autre côté au bras tubulaire, le long d'une génératrice de celui-ci.

Une telle structure, simple et banale dans son principe, présente l'inconvénient de multiplier les soudures puisqu'il faut, à chaque extrémité de l'essieu trois soudures pour relier respectivement entre eux le bras tubulaire, la traverse et le gousset. En plus, elle n'évite pas des concentrations de contraintes, notamment aux extrémités des côtés du gousset qui sont soudés respectivement à la traverse et au bras tubulaire.

La présente invention a pour but de fournir une construction simplifiée, qui permette de limiter le nombre de soudures, tout en assurant une meilleure répartition des contraintes, et par suite, une possibilité d'allégement de l'ensemble, à résistance égale.

Pour obtenir ce résultat, l'invention prévoit que la traverse présente une section qui s'agrandit progressivement au voisinage de sa jonction avec le bras, par approfondissement de la forme en V de la section, et passage à une forme en U, les bords de la traverse qui correspondent aux extrémités du V de la section restant rectilignes, et que la traverse est liée au bras par soudure de la partie ainsi élargie, sans adjonction d'une pièce de renfort telle qu'un gousset.

En quelque sorte, on peut considérer que le gousset de l'art antérieur est incorporé à la traverse.

De préférence, la variation de section de la traverse est obtenue par déformation locale d'un profilé ayant initialement une section en V.

On fait ainsi disparaitre une zone critique vis-à-vis des contraintes en dévers et sous effet de ripage qui, dans l'art antérieur, se situe à la pointe du gousset, plus précisément à l'extrémité de la soudure reliant le gousset à la pointe du profilé en V. L'évolution progressive de la forme de la section, et la suppression d'un cordon de soudure le long de la pointe du V, font disparaître toute variation brutale de l'inertie, et simplifie l'assemblage tout en limitant la longueur des cordons de soudure.

L'invention va maintenant être exposée de façon plus détaillée à l'aide des dessins, parmi lesquels :

La figure 1 est une vue en perspective d'un essieu selon l'art antérieur, et

La figure 2 est une vue analogue d'un essieu conforme à la présente invention.

La figure 3 est une coupe à plus grande échelle selon la ligne III-III de la figure 1.

La figure 4 est une coupe à plus grande échelle selon la ligne IV-IV de la figure 2.

La figure 5 est une coupe à plus grande échelle selon la ligne V-V de la figure 2.

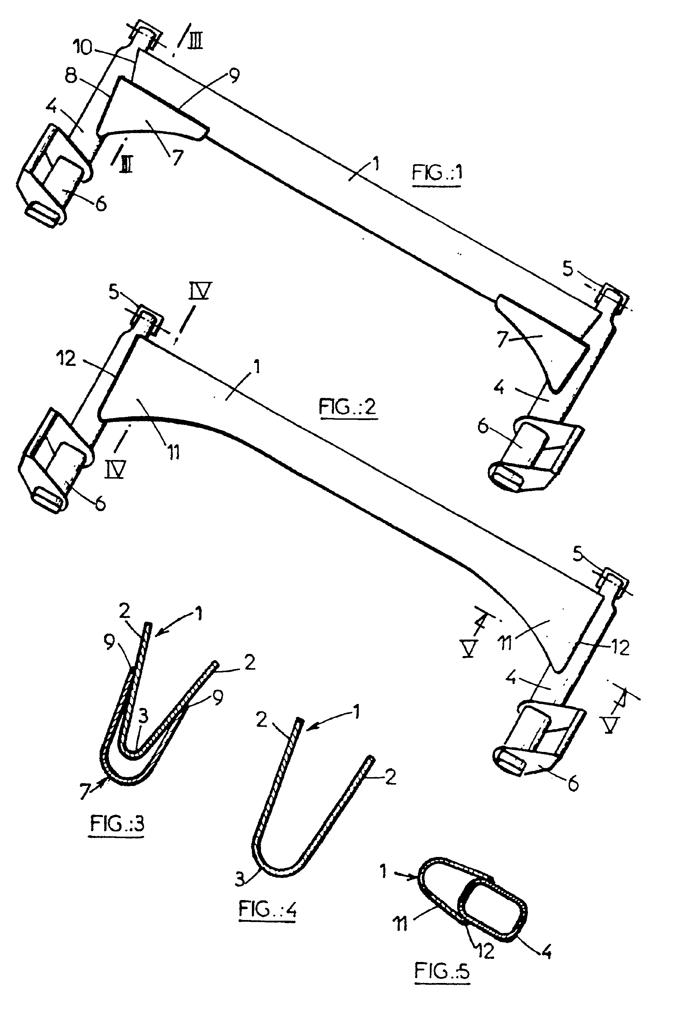

Une traverse 1 a une section de forme générale en V avec deux ailes 2, et une pointe 3. Le bras tubulaire 4 porte une articulation 5, d'axe sensiblement parallèle à la traverse située du côté de l'ouverture du V de la section, et sur l'autre extrémité, un support de fusée 6, qu'on ne décrira pas en détail ici. Sur les figures 1 et 3, qui montrent l'art antérieur, un gousset de renfort 7 est prévu, en forme de triangle rectangle, situé du côté de la pointe 3 du V. Un des côtés du gousset 7 est relié par un cordon de soudure 8 au bras tubulaire 4, et un autre côté du gousset 7 est relié par deux autres cordons de soudure 9 à la traverse 1, sur les ailes 2 du V. En outre, des cordons de soudure 10 relient les ailes 2 de la traverse directement au bras tubulaire 4.

Si on considère maintenant les figures 2 et 4, on constate que le gousset 7 a été supprimé, mais que la traverse 1 présente une partie déformée 11 au voisinage du bras tubulaire. Les figures montrent clairement que la déformation consiste en un approfondissement progressif du V de la section, sans déplacement des extrémités de ce V, puis en une déformation sensiblement en U, si bien que la traverse est soudée directement sur le bras tubulaire 4 par des cordons de soudure 12, situés à peu près aux mêmes endroits que les cordons de soudure 8 et 10 qui, dans la technique de l'art antérieur, relient la traverse et le gousset au bras tubulaire.

On constate la simplification des pièces, la diminution de la quantité de soudures à faire, et surtout la forme progressive de la traverse, ce qui correspond à une suppression de points de concentration de contraintes.

**Revendications**

1. Essieu pour véhicule, comprenant une traverse (1) indéformable en flexion mais souple en torsion, sensiblement rectiligne et 4 section en V dans son ensemble, soudée à chaque extrémité à un bras tubulaire (4) situé dans un plan parallèle à l'axe du V, et orienté à peu près perpendiculairement à la direction de la traverse, ce bras portant à une de ses extrémités un moyen d'articulation (5) au châssis du véhicule, d'axe parallèle à la direction de la traverse, et à son autre extrémité un support de fusée (6) pour une roue du véhicule,
caractérisé en ce que la traverse (1) présente une section qui s'agrandit progressivement au voisinage de sa jonction avec le bras par approfondissement de la forme en V de la section et passage à une forme en U, les bords de la traverse, qui correspondent aux extrémités du V de la section, restant rectilignes,
et en ce que la traverse (1) est liée au bras (4) par soudure de la partie (11) ainsi élargie, sans adjonction d'une pièce de renfort.

2. Essieu selon la revendication 1, caractérisé en ce que la traverse (1) est obtenue à partir d'un profilé à section en V, qu'on déforme à froid à ses extrémités pour obtenir les parties élargies (11).

FIG.:1

FIG.:2

FIG.:3

FIG.:4

FIG.:5

Office européen
des brevets

## RAPPORT DE RECHERCHE EUROPEENNE

Numero de la demande

EP 90 40 3064

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-2582587 (PORSCHE) <br> * page 3, lignes 20 - 30; figures 1-3 * <br> --- | 1, 2 | B60G21/055· |
| Y | DE-B-2735939 (VOLKSWAGEN) <br> * figures 1-3 * <br> --- | 1 | |
| Y | PATENT ABSTRACTS OF JAPAN <br> vol. 7, no. 141 (M-223)(1286) 21 juin 1983, <br> & JP-A-58 53504 (TOYO KOGYO) 30 mars 1983, <br> * le document en entier * | 2 | |
| A | <br> --- | 1 | |
| A | DE-A-2103399 (AUDI NSU AUTO UNION) <br> ----- | | |

**DOMAINES TECHNIQUES RECHERCHES (Int. Cl.5)**

B60G

Le présent rapport a été établi pour toutes les revendications

| Lieu de la recherche | Date d'achèvement de la recherche | Examinateur |
|---|---|---|
| LA HAYE | 12 FEVRIER 1991 | TORSIUS A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.....................................................
& : membre de la même famille, document correspondant

EPO FORM 1503 03.82 (P0402)